# EUROPEAN PATENT SPECIFICATION

(11) **EP 2 994 586 B1**
(45) Date of publication and mention of the grant of the patent: **05.09.2018**
(21) Application number: 14734275.2
(22) Date of filing: 30.04.2014
(51) Int. Cl.: E05B 27/00, E05B 47/06, E05B 47/00, H02K 7/10, H02K 7/11

(54) **ELECTROMECHANICAL CYLINDER LOCK WITH KEY OVERRIDE**
ELEKTROMECHANISCHES ZYLINDERSCHLOSS MIT SCHLÜSSELFREILAUF
SERRURE À BARILLET ÉLECTROMÉCANIQUE À CLÉ D'OUVERTURE MANUELLE

(30) Priority: 06.05.2013 IL 22618613
(43) Date of publication of application: 16.03.2016
(73) Proprietor: Mul-T-Lock Technologies Ltd., 81104 Yavne (IL)
(72) Inventor: KAISER, Yitzhak, 49737 Petah Tikva (IL)
(74) Representative: White, Duncan Rohan
(86) International application number: PCT/US2014/035970
(87) International publication number: WO 2014/182509

(56) References cited:
- EP-A2- 0 276 037
- EP-A2- 0 676 518
- WO-A1-00/16275
- DE-A1- 10 324 690
- US-A1- 2004 040 355

## Description

### FIELD OF THE INVENTION

The present invention relates generally to cylinder lock assemblies, and particularly to an electromechanical cylinder lock with different modes of operation, including actuator operation and knob operation.

### BACKGROUND OF THE INVENTION

Double cylinder locks are well known, which may be locked and unlocked from opposite sides of a door or window. A typical double cylinder assembly, such as a Euro profile cylinder, includes a cylinder body adapted to be mounted transversely through a lock case. The body typically has two rotatable pin plugs, and a central rotatable cam (also referred to as a thrower) for extending and retracting one or more locking bolts in the door lock. Insertion of a proper key into either plug allows actuation of the cam.

In an alternative form, one of the cylinder mechanisms is replaced by a shaft equipped with a knob or the like which can be turned freely by hand to permit operation of the bolt from one side without a key.

In another alternative form, the cylinder lock is actuatable by means of some actuator, such as an electromechanical lock which may be actuatable by means of a drive motor (e.g., a gear motor).

The drive motor is typically mounted in an escutcheon on an inner face of the door or on some internal part of the door. The drive motor has a driveshaft for transmitting rotation to the cylinder lock, typically to a shaft extending from the cylinder lock. When the drive motor is electrically energized, it causes actuation (e.g., rotation) of the cam to open or close the locking bolts. The drive motor is typically energized by a transponder in a key or other device.

EP0676518 describes a lock assembly with a key-driven shaft and a lock drive shaft for driving a locking bolt between locked and unlocked positions. A yieldable coupling allows a motor transmission to be decoupled from the lock drive shaft upon overload of the lock drive shaft.

### SUMMARY OF THE INVENTION

The present invention seeks to provide an improved electromechanical cylinder lock with different modes of operation, including actuator operation and manual (e.g., knob) operation (and in some embodiments, mechanical key override operation), as described more in detail hereinbelow.

There is thus provided in accordance with an embodiment of the present invention a cylinder lock including a cylinder lock body including a cam, an actuator and a manual element for operating the cam, and a clutch contained in the cylinder lock body that is selectively engaged with the cam and with either of the actuator and the manual element. A key-operated pin plug is disposed in the cylinder lock body in which a key is insertable for turning the plug and throwing the cam. An overpowering device is contained in the cylinder lock body operative to couple the key-operated pin plug with the cam and decouple the actuator and the manual element from operating the cam.

In accordance with an embodiment of the present invention, when the key is fully inserted in a keyway of the key-operated pin plug, the overpowering device engages a plug coupler with the cam so as to engage the plug with the cam.

In accordance with an embodiment of the present invention, the manual element is connected to an outer shaft which has a distal face arranged to selectively engage and disengage with the coupler.

In accordance with an embodiment of the present invention, the actuator has a drive shaft, whose distal end is received in a proximal end of a length-adapter, which has a distal end received in a proximal end of the clutch.

In accordance with an embodiment of the present invention, the drive shaft is slidingly engaged with the length-adapter, and the length-adapter is slidingly engaged with the clutch.

### BRIEF DESCRIPTION OF THE DRAWINGS

The present invention will be understood and appreciated more fully from the following detailed description, taken in conjunction with the drawings in which:
Fig. 1 is a simplified pictorial illustration of a cylinder lock, constructed and operative in accordance with a non-limiting embodiment of the present invention;
Fig. 1A is a simplified illustration of the cylinder lock, showing possible modes of cam operation, including actuator, manual element and key-operated actuation;
Figs. 2A and 2B are simplified exploded illustrations of the cylinder lock of Fig. 1;
Fig. 3 is a simplified pictorial illustration of a reduction gear, constructed and operative in accordance with an embodiment of the present invention, wherein the reduction is operatively linked to the actuator of Fig. 1;
Fig. 4 is a simplified side view of the reduction gear of Fig. 3;
Fig. 4A is a simplified sectional view of the reduction gear of Fig. 4, taken along lines A-A in Fig. 4;
Fig. 4B is a simplified sectional view of the reduction gear of Fig. 4, taken along lines B-B in Fig. 4A;
Fig. 4C is a simplified sectional view of the reduction gear of Fig. 4, taken along lines C-C in Fig. 4A; and
Figs. 5A-5F are simplified illustrations of the inner gear of the reduction gear translating and causing rotation of the outer gear, in accordance with an embodiment of the present invention.

### DETAILED DESCRIPTION OF EMBODIMENTS

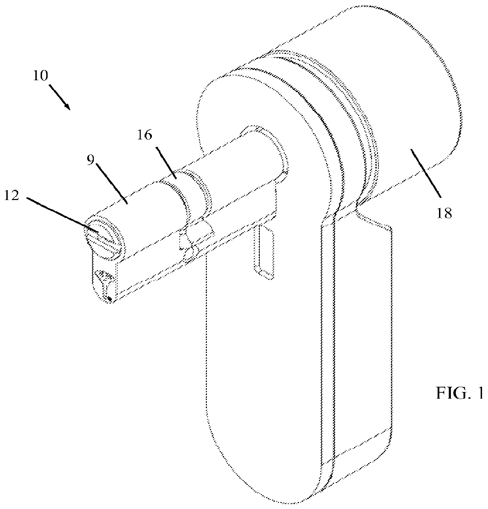

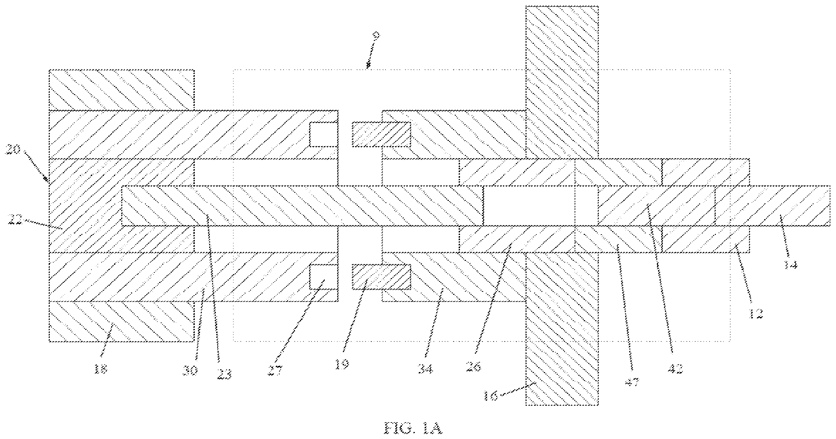

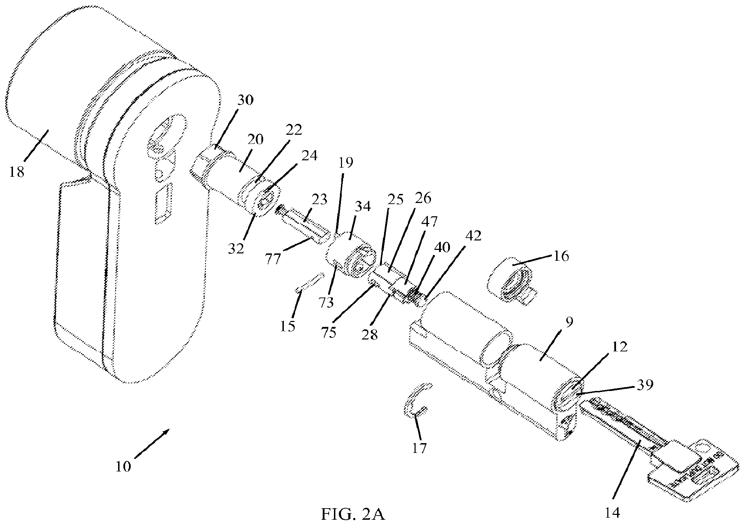

Reference is now made to Fig. 1, which illustrates a cylinder lock 10, constructed and operative in accordance with a non-limiting embodiment of the present invention. Cylinder lock 10 is shown as having a Euro profile, but the invention is not limited to this configuration. Cylinder lock 10 includes a body 9 in which there is a key-operated pin plug 12 in which a key 14 (Figs. 1A, 2A-2B) may be inserted for turning the plug 12 and throwing (which means actuating, such as by turning, but could also be a linear motion) a cam 16 (e.g., tongue or lever) (Figs. 1A, 2A-2B). Cylinder lock 10 also includes a manual element 18 (also referred to as knob or handle 18) and an actuator 20 (Figs. 1A, 2A-2B) for throwing cam 16, as will be explained further below.

Reference is now made to Fig. 1A, which illustrates possible modes of cam operation, including actuator, manual element and key-operated actuation. This is a simplified overview of operation and a more detailed description of each mode will be provided below. The elements shown in Fig. 1A are also shown in Figs. 2A-2B.

A clutch 26 is contained in cylinder lock body 9 that selectively engages cam 16 with either of actuator 20 and manual element 18. (In other words, clutch 26 is not external to body 9.) In the actuator operation, a drive shaft 22 of actuator 20 is engaged with clutch 26, either directly, or as shown in the drawing, via a length-adapter 23, whose distal end is received in clutch 26. Since clutch 26 is engaged with cam 16, the rotation of drive shaft 22 actuates cam 16.

Manual element 18 can be turned to rotate drive shaft 22. For example, manual element 18 can be a housing of the actuator 20, which serves as a turning handle; manual element 18 simply involves grasping the housing and turning it to rotate drive shaft 22. In addition, manual element 18 can be linked with clutch 26 independently of actuator 20. Manual element 18 may be attached to an outer shaft 30, which can engage a coupler 34, such as by means of one or more apertures 27 mating with one or more spring-loaded pins 19 disposed in coupler 34. Coupler 34 engages clutch 26. In the manual operation, turning manual element 18 rotates outer shaft 30, which when coupled to coupler 34, causes clutch 26 to throw cam 16. As will be described later, irrespective of any angular orientation of actuator 20 with respect to clutch 26, manual element 18 can engage clutch 26 by suitable movement of coupler 34.

In the key operation, key-operated pin plug 12 is disposed in the cylinder lock body 9 in which key 14 is insertable for turning the plug 12, which in turn rotates a plug coupler 47 that engages and throws cam 16. As will be described later, an overpowering device 42 is contained in the cylinder lock body 9 operative to couple the key-operated pin plug 12 with the cam 16 and decouple the actuator 20 and the manual element 18 from operating the cam 16. Alternatively, plug 12 can be turned by other means than a key, such as by a motor which is operated by a transponder, for example.

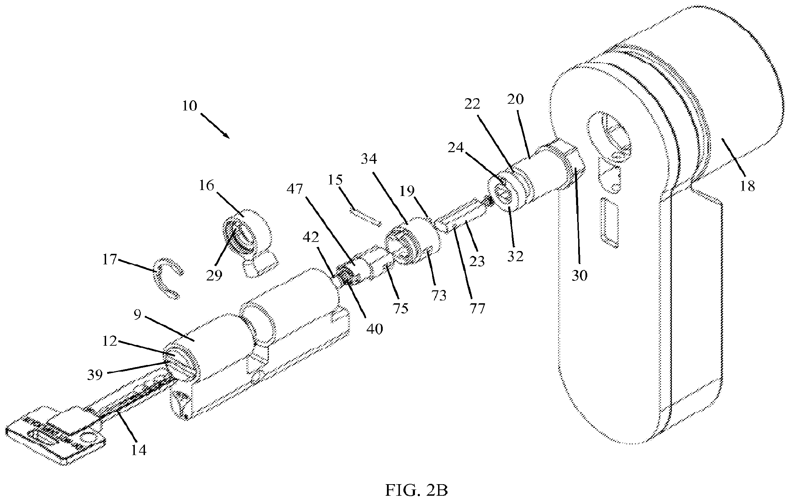

The mode of operation wherein actuator 20 actuates cam 16 is now explained with reference to Figs. 1A, 2A and 2B. Actuator 20 has a drive shaft 22, whose distal end 24 engages a proximal end of a length-adapter 23, whose distal end is received in a proximal end 25 of clutch 26 contained in body 9. Cam 16 may be assembled in body 9 with a circlips 17. Clutch 26 has a distal tooth 28 (Fig. 2A) that engages cam 16. (For example, tooth 28 may enter and push against a recess 29 formed in cam 16, shown in Fig. 2B.) The engagements of drive shaft 22 with length-adapter 23 and of length-adapter 23 with clutch 26 may be accomplished by any suitable means, such as but not limited to, splines, teeth, or other suitable engagement. In the illustrated embodiment in Fig. 2A, a pin 15 enters an elongate hole 73 formed in coupler 34 and an elongate hole 75 formed in clutch 26 and a hole 77 formed in length-adapter 23. The engagements of drive shaft 22 with length-adapter 23, and of length-adapter 23 with clutch 26, may permit sliding between the parts. As will be explained later, the distal tooth 28 of clutch 26 can be moved out of engagement with cam 16.

The mode of operation wherein manual element (knob) 18 actuates cam 16 is now explained with reference to Figs. 1A, 2A and 2B. As seen in Figs. 2A-2B, one or more apertures 27 are formed on a distal face 32 of shaft 22. One or more spring-loaded pins 19 are mounted on the proximal end of coupler 34. When it is desired to operate the cylinder lock 10 with knob 18, knob 18 is pushed inwards in the direction of coupler 34. If pin 19 is not aligned with aperture 27, knob 18 is turned until pin 19 does align with aperture 27. Due to the spring-loading of pin 19, pin 19 juts into aperture 27, thereby effecting engagement of knob 18 with coupler 34. Since coupler 34 engages clutch 26, knob 18 is now mechanically engaged with clutch 26 and can be used to turn clutch 26 and throw cam 16, just as described for the actuator 20.

It is noted that knob 18 can engage clutch 26 via coupler 34 no matter what the angular orientation of actuator 20 is with respect to clutch 26. Thus, even if the actuator 20 is engaged with clutch 26 to operate cam 16, and all of a sudden has some failure so that it cannot throw cam 16 despite being engaged with clutch 26, knob 18 can be pushed to engage clutch 26 via coupler 34, thereby overriding the actuator engagement. This can be useful to prevent a person from getting locked inside a room.

The mode of operation wherein key 14 actuates cam 16 is now explained with reference to Figs. 1A, 2A and 2B. When key 14 is initially inserted in a keyway 39 (Figs. 2A-2B), clutch 26 is still engaged for actuator or knob operation, because distal tooth 28 of clutch 26 is still engaged with cam 16.

In one embodiment, after key 14 has been fully inserted in keyway 39, key 14 presses against a plunger 42 (also called overpowering device 42), which presses against, and is strong enough to overcome, engagement of clutch 26 with cam 16. Overpowering device 42 includes a biasing device 40 (e.g., a coil spring placed underneath the head of plunger 42). With key 14 fully inserted, the biasing force of biasing device 40 causes clutch 26 to turn so that distal tooth 28 (Fig. 2A) of clutch 26 becomes disengaged with cam 16. Referring to Fig. 2B, this means that tooth 28, which abuts against recess 29 in cam 16, turns so that it no longer abuts against recess 29. The biasing force of biasing device 40 then immediately causes clutch 26 to move outwards, so that distal tooth 28 of clutch 26 becomes disengaged with cam 16.

In addition to the disengagement of clutch 26 associated with the actuator or knob operation, the biasing force of biasing device 40 urges plug coupler 47 into engagement with cam 16. Now that plug coupler 47 engages cam 16, turning key 14 will operate cam 16.

Even if someone were to try to force engagement from the knob/actuator side with clutch 26 in an attempt to operate cam 16, such as by pushing outer shaft 30 or drive shaft 22 towards clutch 26, the biasing device 40 is stronger and prevents length-adapter 23 from engaging clutch 26, so that key 14 remains as the only operator of the cylinder lock. This may be of particular importance for allowing someone to enter a room where the occupant has become unable to operate the lock from within the room (e.g., the occupant is weak, has fainted, etc.).

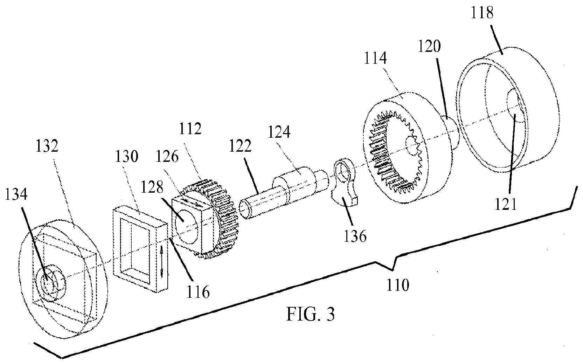

Reference is now made to Figs. 3-4C, which illustrate an embodiment in which the actuator is a reduction gear disposed at least partially inside the cylinder lock, in accordance with a non-limiting embodiment of the present invention.

In the illustrated embodiment, a reduction gear 110 includes an inner gear 112 and an outer gear 114. Outer gear 114 is arranged for rotation about a rotation axis 116. Outer gear 114 is journaled in a housing 118 and has an output shaft 120 that extends outwards from housing 118. The bearing surface is preferably the output shaft 120 rotating in a hole 121 formed in housing 118 (with optional bearing elements or lubrication material, for example) or the outer contour of the outer gear 114 rotating in housing 118 (with optional bearing elements or lubrication material, for example).

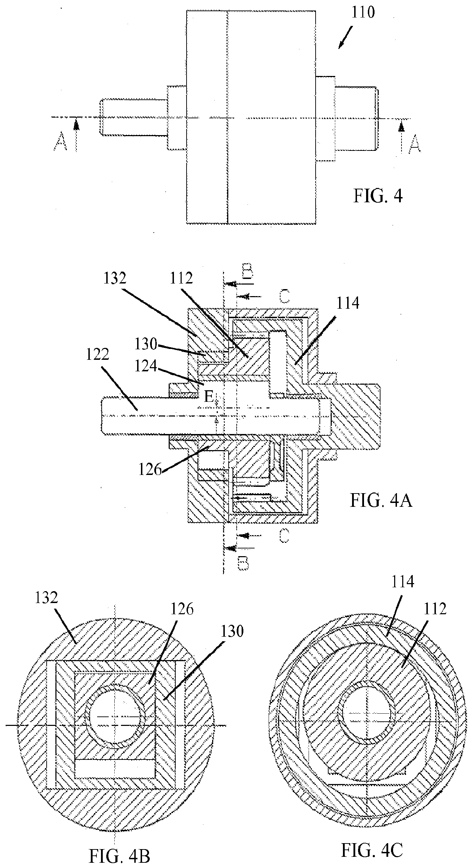

Inner and outer gears 112 and 114 are mounted on a shaft 122, which rotates about rotation axis 116. However, in contrast to outer gear 114, inner gear 112 is arranged for translational movement and does not rotate. Shaft 122 includes an eccentric member 124 which is eccentric to rotation axis 116 (eccentricity E shown in Fig. 4A). During rotation of shaft 122 about rotation axis 116, eccentric member 124 causes inner gear 112 to move in the translational movement. During its translational movement, inner gear 112 meshes with outer gear 114 and causes outer gear 114 to rotate about rotation axis 116, as will be explained more in detail below.

A limiter 126 is provided that constrains the translational movement of inner gear 112 within defined limits. The limiter 126 does not extend beyond the outer teeth of inner gear 112, which is one of the reasons reduction gear 110 is such a compact assembly.

In the illustrated embodiment, limiter 126 is a straight-sided member that extends axially from inner gear 112. Limiter 126 is shown as having four sides, which is considered an optimal number, but the invention is not in any way limited to this configuration. Limiter 126 and inner gear 112 have a common through hole 128 for mounting on shaft 122. Through hole 128 is large enough to accommodate the movement of eccentric member 124, and is thus oversized compared to the outer diameter of the shaft 122.

Limiter 126 is arranged for movement in an inner periphery of a first boundary member 130. First boundary member 130 has straight-sided inner and outer contours. The inner contour accommodates the shape of limiter 126 but is larger than the outer contour of limiter 126 to allow for linear movement of limiter 126 therein.

First boundary member 130 is arranged for movement in an inner periphery of a second boundary member 132. First and second boundary members 130 and 132 are mounted on shaft 122 as well. As seen best in Fig. 4A, shaft 122 is journaled in a mounting hole 134 formed in second boundary member 132 (with optional bearing elements or lubrication material, for example). The portion of shaft 122 that extends outwards of second boundary member 132 is an interface member for connection to an actuator (e.g., a servomotor and the like, not shown) for movement of the reduction gear 110.

A counterweight 136 may be mounted on shaft 122 for balancing with the eccentric member 124.

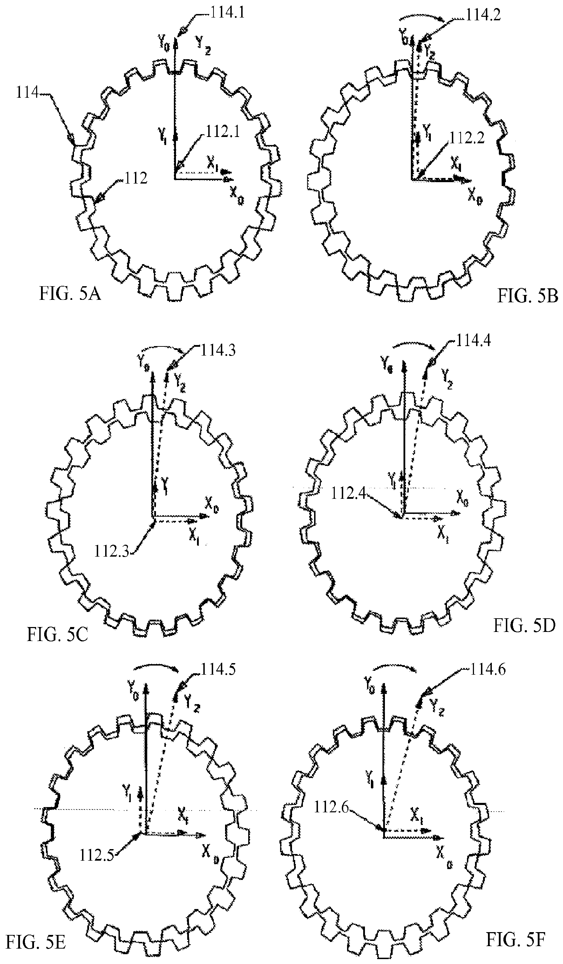

Reference is now made to Figs. 5A-5F, which illustrate inner gear 112 translating and causing rotation of outer gear 114, in accordance with an embodiment of the present invention.

The reference axes are X₀ and Y₀. The Cartesian position of inner gear 112 is shown as coordinates X₀ and Y₀. The vector showing the angular position of outer gear 114 is designated as Y₂.

Initially, as seen in Fig. 5A, inner gear 112 is positioned relative to outer gear 114 such that the upper teeth mesh. The initial position of inner gear 112 is designated 112.1 and initial position of outer gear 114 is designated 114.1.

In Fig. 5B, inner gear 112 translates to the right and downwards to position 112.2 (by rotation of the eccentric member, not shown here for simplicity). This causes the uppermost teeth of inner gear 112 to move out of outer gear 114 and the right teeth to mesh with outer gear 114. This causes outer gear 114 to rotate clockwise to position 114.2.

In Fig. 5C, inner gear 112 translates to the left and downwards to position 112.3. This causes the right teeth of inner gear 112 to move out of outer gear 114 and the lower teeth to mesh with outer gear 114. This causes outer gear 114 to further rotate clockwise to position 114.3.

In Fig. 5D, inner gear 112 translates to the left and upwards to position 112.4. This causes the lower teeth of inner gear 112 to move out of outer gear 114 and the lower left teeth to mesh with outer gear 114. This causes outer gear 114 to further rotate clockwise to position 114.4.

In Fig. 5E, inner gear 112 translates to the left and upwards to position 112.5. This causes the lower left teeth of inner gear 112 to move out of outer gear 114 and the more upper left teeth to mesh with outer gear 114. This causes outer gear 114 to further rotate clockwise to position 114.5.

In Fig. 5F, inner gear 112 translates to the right and upwards to position 112.4. This causes the left teeth of inner gear 112 to move out of outer gear 114 and the upper teeth to mesh with outer gear 114. This causes outer gear 114 to further rotate clockwise to position 114.6. The cycle then repeats itself.

It is noted that reduction gear 110 allows for a very robust construction of the gear teeth. The teeth do not need to be involute; rather the teeth of the inner and outer gears can be straight-sided, with robust thickness. This provides superior strength, significantly reduced bending and contact stresses on the teeth, and increased lifetime. The meshing speed of the teeth is slow because it is governed by the radius of the eccentric member and not by the radius of the inner gear.

It is noted that in other embodiments, the inner gear may be arranged for rotation about a rotation axis and the outer gear arranged for translational movement. In other embodiments, the reduction gear in the cylinder lock can be of the type wherein both the inner and outer gears rotate, such as but not limited to, harmonic drive reduction gears or planetary-friction type speed change devices that have a plurality of planetary rolling elements disposed between a sun roller and an outer ring.

## Claims

1. A cylinder lock (10) comprising:
a cylinder lock body (9);
a cam (16);
an actuator (20) and a manual element (18) for operating said cam (16);
a clutch (26) contained in said cylinder lock body (9) that is selectively engaged with said cam (16) and with either of said actuator (20) and said manual element (18); and
a plug (12) disposed in said cylinder lock body (9), wherein turning said plug (12) throws said cam (16);
**characterised by** an overpowering device (42) contained in said cylinder lock body (9) operative to couple said plug (12) with said cam (16) and decouple said actuator (20) and said manual element (18) from operating said cam (16).

2. The cylinder lock (10) according to claim 1, further comprising a coupler (34) contained in said cylinder lock body (9), wherein said coupler (34) selectively engages said manual element (18) with said clutch (26).

3. The cylinder lock (10) according to claim 2, wherein said coupler (34) is capable of engaging said manual element (18) with said clutch (26) irrespective of any angular orientation of said actuator (20) with respect to said clutch (26).

4. The cylinder lock (10) according to any one of claims 1 to 3, wherein when a key (14) is fully inserted in a keyway of said plug (12), said overpowering device (42) engages a plug coupler (47) with said cam (16) so as to engage said plug (12) with said cam (16).

5. The cylinder lock (10) according to any one of claims 1 to 4, wherein said manual element (18) is connected to a shaft (22) which has a distal face (32) arranged to selectively engage and disengage with said coupler (34).

6. The cylinder lock (10) according to any one of claims 1 to 5, wherein said actuator (20) has a drive shaft (22), whose distal end is received in a proximal end of a length-adapter (23), which has a distal end received in a proximal end of said clutch (26).

7. The cylinder lock (10) according to claim 6, wherein said drive shaft (22) is slidingly engaged with said length-adapter (23), and said length-adapter (23) is slidingly engaged with said clutch (26).

8. The cylinder lock (10) according to any one of claims 1 to 7, wherein said clutch (26) has a distal tooth (28) operative to enter and push against a recess (29) formed in said cam (16).

9. The cylinder lock (10) according to any one of claims 1 to 8, wherein said actuator (20) is operatively linked to a reduction gear motor disposed inside said cylinder lock (10).

10. The cylinder lock (10) according to claim 9, wherein said reduction gear motor (110) comprises an inner gear (112) and an outer gear (114), said outer gear (114) arranged for rotation about a rotation axis.

## Patentansprüche

1. Zylinderschloss (10), umfassend:
einen Zylinderschlosskörper (9);
einen Mitnehmer (16);
ein Betätigungsglied (20) und ein Bedienelement (18) zum Betätigen des Mitnehmers (16);
eine in dem Zylinderschlosskörper (9) enthaltene Kupplung (26), die wahlweise mit dem Mitnehmer (16) und mit einem von Betätigungsglied (20) und Bedienelement (18) in Eingriff gebracht wird; und
einen Zylinderkern (12), der in dem Zylinderschlosskörper (9) angeordnet ist, worin das Drehen des Zylinderkerns (12) den Mitnehmer (16) einrückt;
**gekennzeichnet durch** eine in dem Zylinderschlosskörper (9) enthaltene Überwindungsvorrichtung (42), die betriebsfähig ist, den Zylinderkern (12) mit dem Mitnehmer (16) zu koppeln und das Betätigungsglied (20) und das Bedienelement (18) vom Betätigen des Mitnehmers (16) zu entkoppeln.

2. Zylinderschloss (10) nach Anspruch 1, ferner einen in dem Zylinderschlosskörper (9) enthaltenen Koppler (34) umfassend, worin der Koppler (34) das Bedienelement (18) selektiv mit der Kupplung (26) in Eingriff bringt.

3. Zylinderschloss (10) nach Anspruch 2, worin der Koppler (34) imstande ist, ungeachtet jeglicher Winkelausrichtung des Betätigungsglieds (20) in Bezug auf die Kupplung (26) das Bedienelement (18) mit der Kupplung (26) in Eingriff zu bringen.

4. Zylinderschloss (10) nach einem der Ansprüche 1 bis 3, worin, wenn ein Schlüssel (14) vollständig in einen Schlüsselkanal des Zylinderkerns (12) eingeführt ist, die Überwindungsvorrichtung (42) einen Zylinderkernkoppler (47) mit dem Mitnehmer (16) in Eingriff bringt, um dadurch den Zylinderkern (12) mit dem Mitnehmer (16) in Eingriff zu bringen.

5. Zylinderschloss (10) nach einem der Ansprüche 1 bis 4, worin das Bedienelement (18) mit einer Achse (22) verbunden ist, die eine distale Stirnfläche (32) aufweist, die dafür eingerichtet ist, selektiv in den Koppler (34) einzurasten und aus ihm auszurasten.

6. Zylinderschloss (10) nach einem der Ansprüche 1 bis 5, worin das Betätigungsglied (20) eine Antriebswelle (22) aufweist, deren distales Ende in einem proximalen Ende eines Längenadapters (23) aufgenommen ist, der ein distales Ende hat, das in einem proximalen Ende der Kupplung (26) aufgenommen ist.

7. Zylinderschloss (10) nach Anspruch 6, worin die Antriebswelle (22) gleitend mit dem Längenadapter (23) in Eingriff gebracht wird und der Längenadapter (23) gleitend mit der Kupplung (26) in Eingriff gebracht wird.

8. Zylinderschloss (10) nach einem der Ansprüche 1 bis 7, worin die Kupplung (26) einen distalen Zahn (28) aufweist, der betriebsfähig ist, in eine in dem Mitnehmer (16) ausgebildete Aussparung (29) einzutreten und dagegen zu drücken.

9. Zylinderschloss (10) nach einem der Ansprüche 1 bis 8, worin das Betätigungsglied (20) betrieblich mit einem innerhalb des Zylinderschlosses (10) angeordneten Untersetzungsgetriebemotor verbunden ist.

10. Zylinderschloss (10) nach Anspruch 9, worin der Untersetzungsgetriebemotor (110) ein inneres Zahnrad (112) und ein äußeres Zahnrad (114) umfasst, wobei das äußere Zahnrad (114) zur Drehung um eine Drehachse eingerichtet ist.

## Revendications

1. Serrure à barillet (10) comprenant :
un corps de serrure à barillet (9) ;
une came (16) ;
un actionneur (20) et un élément manuel (18) pour faire fonctionner ladite came (16) ;
un embrayage (26) qui est contenu dans ledit corps de serrure à barillet (9) et qui est engagé de façon sélective avec ladite came (16) et avec soit ledit actionneur (20), soit ledit élément manuel (18) ; et
un rotor (12) qui est disposé dans ledit corps de serrure à barillet (9), dans laquelle le fait de faire tourner ledit rotor (12) actionne ladite came (16) ;
**caractérisée par** un dispositif de commande maître (42) qui est contenu dans ledit corps de serrure à barillet (9) et dont la fonction est de coupler ledit rotor (12) avec ladite came (16) et de découpler ledit actionneur (20) et ledit élément manuel (18) pour ne pas faire fonctionner ladite came (16).

2. Serrure à barillet (10) selon la revendication 1, comprenant en outre un coupleur (34) qui est contenu dans ledit corps de serrure à barillet (9), dans lequel ledit coupleur (34) engage de façon sélective ledit élément manuel (18) avec ledit embrayage (26).

3. Serrure à barillet (10) selon la revendication 2, dans laquelle ledit coupleur (34) dispose de la capacité d'engager ledit élément manuel (18) avec ledit embrayage (26) indépendamment d'une quelconque orientation angulaire dudit actionneur (20) par rapport audit embrayage (26).

4. Serrure à barillet (10) selon l'une quelconque des revendications 1 à 3, dans laquelle, lorsqu'une clé (14) est complètement insérée dans un logement de clé dudit rotor (12), ledit dispositif de commande maître (42) engage un coupleur de rotor (47) avec ladite came (16) de manière à engager ledit rotor (12) avec ladite came (16).

5. Serrure à barillet (10) selon l'une quelconque des revendications 1 à 4, dans laquelle ledit élément manuel (18) est connecté à un arbre (22) qui comporte une face distale (32) qui est agencée de manière à ce qu'elle soit engagée avec ledit coupleur (34) et à ce qu'elle soit désengagée de celui-ci, de façon sélective.

6. Serrure à barillet (10) selon l'une quelconque des revendications 1 à 5, dans laquelle ledit actionneur (20) comporte un arbre d'entraînement (22) dont une extrémité distale est reçue dans une extrémité proximale d'un adaptateur de longueur (23), lequel comporte une extrémité distale qui est reçue dans une extrémité proximale dudit embrayage (26).

7. Serrure à barillet (10) selon la revendication 6, dans laquelle ledit arbre d'entraînement (22) est engagé de façon coulissante avec ledit adaptateur de longueur (23), et ledit adaptateur de longueur (23) est engagé de façon coulissante avec ledit embrayage (26).

8. Serrure à barillet (10) selon l'une quelconque des revendications 1 à 7, dans laquelle ledit embrayage (26) comporte une dent distale (28) dont la fonction est d'entrer dans un évidement (29) qui est formé dans ladite came (16) et d'exercer une poussée contre celui-ci.

9. Serrure à barillet (10) selon l'une quelconque des revendications 1 à 8, dans laquelle ledit actionneur (20) est lié de manière fonctionnelle à un moteur à engrenage(s) réducteur(s) qui est disposé à l'intérieur de ladite serrure à barillet (10).

10. Serrure à barillet (10) selon la revendication 9, dans laquelle ledit moteur à engrenages réducteurs (110) comprend un engrenage interne (112) et un engrenage externe (114), ledit engrenage externe (114) étant agencé de manière à ce qu'il soit entraîné en rotation autour d'un axe de rotation.
